# EUROPÄISCHE PATENTANMELDUNG

(11) **EP 4 707 070 A1**
(43) Veröffentlichungstag der Anmeldung: **11.03.2026**
(21) Anmeldenummer: 25199058.6
(22) Anmeldetag: 29.08.2025
(51) Int. Cl.: B60N 2/34, B60P 3/38, B62D 33/06

(54) **LIEGEVORRICHTUNG FÜR EINE NUTZFAHRZEUGKABINE, NUTZFAHRZEUGKABINE MIT EINER SOLCHEN LIEGEVORRICHTUNG UND NUTZFAHRZEUG**

(30) Priorität: 06.09.2024 DE 102024125697
(71) Anmelder: Daimler Truck AG, 70771 Leinfelden-Echterdingen (DE)
(72) Erfinder: Bücheler, David, Leinfelden-Echterdingen (DE)

(57) **Zusammenfassung**

Die Erfindung betrifft eine Liegevorrichtung (1) für eine Nutzfahrzeugkabine eines Nutzfahrzeugs, aufweisend:
- eine Matratze (3), die einen mehrlagigen Matratzenkern (7) aufweist, und
- ein Matratzenaufnahmeelement (5), das einen Grundkörper (9) und zwei textile Decklagen (11) aufweist, wobei die textilen Decklagen (11) an zwei gegenüberliegenden Seiten des Grundkörpers (9) befestigt sind, wobei
- die Matratze (3) und das Matratzenaufnahmeelement (5) einen Vorrichtungswerkstoff aufweisen oder aus einem Vorrichtungswerkstoff gebildet sind, wobei der Vorrichtungswerkstoff ein Kunststoff ist.

Außerdem betrifft die Erfindung eine Nutzfahrzeugkabine mit einer solchen Liegevorrichtung (1) und ein Nutzfahrzeug mit einer solchen Nutzfahrzeugkabine.

## Beschreibung

Die Erfindung betrifft eine Liegevorrichtung für eine Nutzfahrzeugkabine, eine Nutzfahrzeugkabine mit einer solchen Liegevorrichtung und ein Nutzfahrzeug mit einer solchen Nutzfahrzeugkabine.

Nutzfahrzeuge weisen in ihrer Nutzfahrzeugkabine üblicherweise eine Liegevorrichtung auf, auf der eine Person liegen kann, beispielsweise um sich auszuruhen oder um in dem Nutzfahrzeug zu schlafen. Eine solche Liegevorrichtung weist üblicherweise eine Matratze und ein Matratzenaufnahmeelement, insbesondere einen Lattenrost mit einem Holzrahmen und einer Aluminiumverkleidung, auf. Um einen hohen Komfort zu gewährleisten, weist der Lattenrost häufig eine zusätzliche Federung auf. Als Matratze wird oft eine vergleichsweise dicke Kaltschaummatratze aus einem duroplastischen Kunststoff verwendet. Die Liegevorrichtung weist somit eine vergleichsweise hohe Masse auf. Da Nutzfahrzeuge von verschiedenen Personen genutzt werden, wird üblicherweise auf der Kaltschaummatratze ein Topper angeordnet, der einer Person individuell zugeordnet ist und der nach der Fahrt aus der Nutzfahrzeugkabine entnommen wird. Kaltschaummatratzen können mit der Zeit Feuchtigkeit aufnehmen, was zu Schädlingsbefall, insbesondere Milbenbefall, führen kann. Der Schädlingsbefall kann Allergien hervorrufen oder begünstigen, was zu Unwohlsein bei den Personen führen kann, die das Nutzfahrzeug verwenden. Insgesamt kann eine solche Liegevorrichtung verschiedene Werkstoffe aufweisen, wie beispielsweise Furnierholz, Kunststofffasern, Aluminium, Polyurethanschaum, Stahl und eine Lackierung. Ist eine solche Liegevorrichtung abgenutzt oder beschädigt, muss diese aufwendig zerlegt werden. Ebenfalls ist eine solche Liegevorrichtung nur aufwendig recycelbar. Aufgrund der verschiedenen Werkstoffe wird eine wirtschaftliche Verwendung von rezyklierten Werkstoffen momentan nicht umgesetzt.

Der Erfindung liegt daher die Aufgabe zugrunde, eine Liegevorrichtung für eine Nutzfahrzeugkabine, eine Nutzfahrzeugkabine mit einer solchen Liegevorrichtung und ein Nutzfahrzeug mit einer solchen Nutzfahrzeugkabine zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem eine Liegevorrichtung für eine Nutzfahrzeugkabine eines Nutzfahrzeugs geschaffen wird. Die Liegevorrichtung weist eine Matratze und ein Matratzenaufnahmeelement auf. Die Matratze weist einen mehrlagigen Matratzenkern auf. Das Matratzenaufnahmeelement weist einen Grundkörper und zwei textile Decklagen auf, wobei die textilen Decklagen an zwei gegenüberliegenden Seiten des Grundkörpers befestigt sind. Die Matratze und das Matratzenaufnahmeelement weisen einen Vorrichtungswerkstoff auf oder sind aus einem Vorrichtungswerkstoff gebildet, wobei der Vorrichtungswerkstoff ein Kunststoff ist.

Vorteilhaft weist die Liegevorrichtung eine vergleichsweise geringe Masse auf. Der mehrlagige Matratzenkern ist vorteilhaft besonders luftdurchlässig ausgebildet, wodurch die Matratze vergleichsweise wenig Feuchtigkeit aufnimmt und aufgenommene Feuchtigkeit relativ gut wieder an die Umgebungsluft abgeben kann. Ferner stellt die Kunststoffmatratze einen vergleichsweise schlechten Lebensraum für Schädlinge, insbesondere Milben, dar. Dabei kann die Liegevorrichtung nach dem Ausbauen - wenn diese beispielsweise abgenutzt ist - besonders einfach wiederverwertet, insbesondere geschreddert, insbesondere recycelt, werden, da keine unterschiedlichen Materialien sortiert werden müssen. Ebenfalls ist es möglich, die gesamte Liegevorrichtung aus einem bereits recycelten Kunststoff herzustellen.

In einer Ausführungsform weist der mehrlagige Matratzenkern ein Abstandsgewirke auf. Unter einem Abstandsgewirke werden im Kontext der vorliegenden technischen Lehre insbesondere doppelflächige Textilien verstanden, bei denen die kettengewirkten Warenflächen durch abstandshaltende Verbindungsfäden, sogenannte Polfäden, auf Distanz gehalten werden. Es handelt sich bei den Abstandsgewirken um Maschenwaren und Gewirke, die um eine dritte Dimension erweitert wurden.

In einer Ausführungsform ist der Vorrichtungswerkstoff ausgewählt aus einer Gruppe, bestehend aus: Einem Polyethylenterephthalat(PET)-Werkstoff, einem Polylactide(PLA)-Werkstoff, einem Polypropylen(PP)-Werkstoff und einem Polyamid(PA)-Werkstoff.

In einer Ausführungsform weisen die Matratze und das Matratzenaufnahmeelement, insbesondere die zwei textilen Decklagen und der Grundkörper, den gleichen, insbesondere identischen, Kunststoff auf oder sind aus dem gleichen, insbesondere identischen, Kunststoff gebildet.

Insbesondere weisen die Matratze und das Matratzenaufnahmeelement, insbesondere die zwei textilen Decklagen und der Grundkörper, den gleichen, insbesondere identischen, Vorrichtungswerkstoff auf oder sind aus dem gleichen, insbesondere identischen, Vorrichtungswerkstoff gebildet.

In einer bevorzugten Ausführungsform ist die Liegevorrichtung aus einem einzigen Kunststoff, insbesondere aus einem einzigen Vorrichtungswerkstoff, gebildet, der jedoch in unterschiedlicher Morphologie, insbesondere als Faser, als Schaum oder als Vollmaterial, vorliegt.

In einer Ausführungsform ist das Matratzenaufnahmeelement plattenförmig, insbesondere als eine Platte ausgebildet.

In einer Ausführungsform sind die textilen Decklagen als textiles Gewebe, textiles Gelege oder textiles Gewirke ausgebildet.

In einer Ausführungsform sind die Decklagen mit einer Kunststoff-Matrix imprägniert oder die Kunststoff-Matrix ist auf die Decklagen aufgebracht, insbesondere auflaminiert.

Vorteilhaft sind die Decklagen mittels der Kunststoff-Matrix vor Feuchtigkeit geschützt. Insbesondere absorbieren die Decklagen aufgrund der Kunststoff-Matrix vergleichsweise wenig, insbesondere keine Feuchtigkeit.

In einer Ausführungsform sind die textilen Decklagen bereichsweise mittels einer Wärmebehandlung thermisch verfestigt, insbesondere konsolidiert.

Gemäß einer Weiterbildung der Erfindung ist vorgesehen, dass der Grundkörper als ein Schaumstoffkörper oder als ein Wabenstrukturkörper ausgebildet ist. Vorteilhaft weist der Grundkörper dabei eine besonders geringe Masse auf, wobei gleichzeitig eine ausreichende Festigkeit gewährleistet ist.

In einer Ausführungsform weist der Wabenstrukturkörper eine Mehrzahl von Hohlkammern auf, wobei die Hohlkammern mittels durch den Grundkörper gebildete Kammerwände und mittels der zwei Decklagen gebildet sind.

Gemäß einer Weiterbildung der Erfindung ist vorgesehen, dass das Matratzenaufnahmeelement ein Sichtflächenelement aufweist, das an einer Decklage der zwei Decklagen befestigt ist. Das Sichtflächenelement ist als ein Textil oder als eine Folie ausgebildet, wobei das Sichtflächenelement den Vorrichtungswerkstoff aufweist oder aus dem Vorrichtungswerkstoff gebildet ist. Vorteilhaft weist das Matratzenaufnahmeelement durch das Sichtflächenelement eine vergleichsweise hochwertige Anmutung auf, wodurch insbesondere das Wohlbefinden einer in der Nutzfahrzeugkabine befindlichen Person gefördert werden kann.

In einer Ausführungsform weist das Sichtflächenelement den gleichen, insbesondere identischen, Kunststoff auf oder ist aus dem gleichen, insbesondere identischen, Kunststoff gebildet als die Matratze und das Matratzenauflageelement. Dadurch wird vorteilhaft das Recycling der Liegevorrichtung vereinfacht.

Insbesondere weist das Sichtflächenelement den gleichen, insbesondere identischen, Vorrichtungswerkstoff auf oder ist aus dem gleichen, insbesondere identischen, Vorrichtungswerkstoff gebildet als die Matratze und das Matratzenauflageelement.

Gemäß einer Weiterbildung der Erfindung ist vorgesehen, dass die Decklage mit dem Sichtflächenelement bespannt oder das Sichtflächenelement mit einem Klebstoff auf der Decklage fest geklebt ist. Dies stellt eine besonders einfache Befestigung des Sichtflächenelement an der Decklage dar.

In einer Ausführungsform weist der Klebstoff den Vorrichtungswerkstoff auf oder ist aus dem Vorrichtungswerkstoff gebildet. Insbesondere weist der Klebstoff den gleichen, insbesondere identischen, Kunststoff auf oder ist aus dem gleichen, insbesondere identischen, Kunststoff gebildet, als das Sichtflächenelement.

Gemäß einer Weiterbildung der Erfindung ist vorgesehen, dass auf dem Matratzenaufnahmeelement eine Mehrzahl von Federelementen angeordnet ist, auf denen die Matratze aufliegt. Vorteilhaft wird dadurch ein Federungskomfort der Liegevorrichtung erhöht.

In einer Ausführungsform weisen die Federelemente den Vorrichtungswerkstoff auf oder sind aus dem Vorrichtungswerkstoff gebildet. Insbesondere weisen die Federelemente einen gleichen, insbesondere identischen, Kunststoff auf oder sind aus einem gleichen, insbesondere identischen Kunststoff gebildet als das Matratzenaufnahmeelement.

Gemäß einer Weiterbildung der Erfindung ist vorgesehen, dass die Federelemente an dem Matratzenaufnahmeelement, insbesondere an einer der Matratze zugewandten Seite, befestigt sind.

Insbesondere sind zur Komfortsteigerung die Federelemente gleichmäßig auf der der Matratze zugewandten Seite beabstandet.

Gemäß einer Weiterbildung der Erfindung ist vorgesehen, dass das Matratzenaufnahmeelement eine Mehrzahl von Ausnehmungen aufweist, in die die Federelemente eingesteckt sind. Vorteilhaft stellt dies eine besonders einfache Befestigung der Federelemente an dem Matratzenauflageelement dar. Insbesondere können defekte Federelemente besonders einfach ausgetauscht werden.

In einer Ausführungsform weisen die Federelemente jeweils ein Einsteckelement auf, das in eine Ausnehmung des Matratzenaufnahmeelements eingesteckt ist, wobei das Einsteckelement ausgewählt ist aus einem Einsteckzapfen, einem Einsteckclip und einem Einsteckrastelement.

In einer Ausführungsform - wenn der Grundkörper als ein Wabenstrukturkörper ausgebildet ist - weist eine Decklage der zwei Decklagen die Mehrzahl von Ausnehmungen auf, die die Kammern der Wabenstruktur öffnen. Vorteilhaft können die Einsteckelemente jeweils in eine solche Ausnehmung eingesteckt werden, wobei sich gerade bei Verwendung eines Einsteckrastelements der Vorteil ergibt, dass dieses in die Kammer eingreifen kann und somit eine besonders sichere Befestigung des Federelements an dem Matratzenauflageelement gewährleistet ist.

Gemäß einer Weiterbildung der Erfindung ist vorgesehen, dass der Matratzenkern mehrere aufeinander angeordnete Matratzenteilkerne aufweist. Vorteilhaft wird dadurch eine Luftdurchlässigkeit der Matratze verbessert.

In einer Ausführungsform weist ein Matratzenteilkern eine Dicke von 10 bis 50 mm, insbesondere von 15 bis 45 mm, insbesondere bis 40 mm, insbesondere bis 35 mm, insbesondere bis 30 mm, insbesondere bis 25 mm, insbesondere 20 mm, auf.

Gemäß einer Weiterbildung der Erfindung ist vorgesehen, dass ein Matratzenteilkern der Matratzenteilkerne eine Oberschicht und eine Unterschicht aufweist, die mittels dazwischen angeordneter und mit der Oberschicht und der Unterschicht verbundener Verbindungsfäden beabstandet sind.

Insbesondere sind die Matratzenteilkerne jeweils als Abstandsgewirke ausgebildet. Dies erhöht vorteilhaft den Komfort der Matratze.

Die Verbindungsfäden ermöglichen insbesondere eine besonders gute Luftdurchlässigkeit der Matratze. Somit kann von der Matratze aufgenommene Feuchtigkeit besonders einfach wieder an die Umgebungsluft abgegeben werden.

In einer Ausführungsform ist eine Elastizität des Matratzenteilkerns abhängig von einer Fadenanzahl, einer Fadenform, einem Fadenabstand, einer Fadenlänge und/oder einer Fadenelastizität, insbesondere jeweils der Verbindungsfäden. In einer Ausführungsform sind die Verbindungsfäden gekrümmt geformt.

Gemäß einer Weiterbildung der Erfindung ist vorgesehen, dass der Matratzenkern in einer Matratzenhülle angeordnet ist, wobei die Matratzenhülle ein textiles Gestrick, ein textiles Gewebe, ein textiles Vlies oder eins textilen Gewirk aufweist oder aus einem textilen Gestrick, einem textilen Gewebe, einem textilen Vlies oder einem textilen Gewirk besteht. Eine solche Ausgestaltung begünstigt vorteilhaft die Luftdurchlässigkeit der Matratze.

In einer Ausführungsform weisen die Matratzenhülle und der Matratzenkern den gleichen, insbesondere identischen, Kunststoff auf oder sind aus dem gleichen, insbesondere identischen, Kunststoff gebildet.

In einer Ausführungsform weisen die Matratzenhülle und der Matratzenkern den gleichen, insbesondere identischen, Vorrichtungswerkstoff auf oder sind aus dem gleichen, insbesondere identischen, Vorrichtungswerkstoff gebildet, wie die Matratze und das Matratzenaufnahmeelement.

In einer Ausführungsform weist die Matratzenhülle eine Hüllenwandstärke von höchstens 10 mm, insbesondere höchstens 6 mm, insbesondere höchstens 3 mm auf.

In einer Ausführungsform ist die Matratzenhülle entlang einer Längsseite öffenbar ausgebildet, insbesondere mittels eines Reisverschlusses, eines Klettverschlusses und/oder mittels mehrerer Knöpfe, insbesondere Druckknöpfe.

Gemäß einer Weiterbildung der Erfindung ist vorgesehen, dass die Liegevorrichtung ein zusätzliches Dämpfungselement aufweist.

In einer Ausführungsform weist das zusätzliche Dämpfungselement einen Polyurethan-Werkstoff auf oder ist aus einem Polyurethan-Werkstoff gebildet.

In einer Ausführungsform ist das zusätzliche Dämpfungselement in der Matratze angeordnet. In einer anderen Ausführungsform ist das zusätzliche Dämpfungselement auf die Matratze aufgelegt.

In einer Ausführungsform weist das zusätzliche Dämpfungselement eine ähnliche Längs- und Quererstreckung auf, wie die Matratze, sodass das zusätzliche Dämpfungselement ganzflächig auf der Matratze aufliegt oder sich innerhalb der Matratze ganzflächig erstreckt. In einer anderen Ausführungsform weist das zusätzliche Dämpfungselement eine kleinere, insbesondere deutlich kleinere, Längs- und Quererstreckung auf, sodass das zusätzliche Dämpfungselement nur bereichsweise, insbesondere lokal, auf der Matratze aufliegt oder sich innerhalb der Matratze nur bereichsweise, insbesondere lokal, erstreckt.

In einer Ausführungsform weist ein Matratzenteilkern mehrere verfestigte Bereiche, in denen die Verbindungsfäden verfestigt, insbesondere konsolidiert, sind, und mehrere unverfestigte Bereiche, in denen die Verbindungsfäden nicht verfestigt, insbesondere nicht konsolidiert sind, auf.

Vorteilhaft wirken die nicht verfestigten Verbindungsfäden wie eine Art Scharnier, sodass eine Dämpfung der Matratze, die den bereichsweise verfestigten Matratzenteilkern aufweist, verbessert ist.

Gemäß einer Weiterbildung der Erfindung ist vorgesehen, dass die Liegevorrichtung eine Temperierungsvorrichtung aufweist, die eingerichtet ist, um die Matratze wahlweise zu heizen und zu kühlen. Vorteilhaft kann damit das Wohlbefinden einer auf der Liegevorrichtung liegenden Person erhöht werden. Ebenfalls ist es möglich, die Matratze durchzuheizen und insbesondere dadurch vorhandene Schädlinge, insbesondere Milben, abzutöten.

In einer Ausführungsform ist die Temperierungsvorrichtung als eine elektrische Belüftungsvorrichtung ausgebildet. Insbesondere weist das Matratzenaufnahmeelement mehrere Lüftungskanäle auf, mittels derer Luft zur Matratze befördert werden kann.

Gemäß einer Weiterbildung der Erfindung ist vorgesehen, dass die Liegevorrichtung mehrere durch die Matratze hindurchreichende Zugelemente aufweist. Die Zugelemente sind mit einem ersten Ende an einer Matratzenoberseite oder an einer Matratzenseitenseite befestigt. Die Zugelemente sind derart angeordnet, dass durch Ziehen an einem zweiten Ende der Zugelemente die Matratze komprimiert wird.

In einer Ausführungsform sind die Zugelemente aus zusammengedrehten oder geflochtenen Fasern gebildet. Insbesondere sind die Zugelemente als Zugseile ausgebildet. Insbesondere weisen die Zugelemente den Vorrichtungswerkstoff auf oder sind aus dem Vorrichtungswerkstoff gebildet.

Vorteilhaft ist es mittels der Zugelemente möglich, ein Matratzenvolumen zu verkleinern, insbesondere wenn die Matratze verstaut werden soll oder wenn das Matratzenaufnahmeelement, auf dem die Matratze angeordnet ist, in einer Nutzfahrzeugkabine in eine Verstauposition geklappt werden soll. Somit benötigt die in der Verstauposition befindliche Liegevorrichtung besonders wenig Platz in der Nutzfahrzeugkabine. Ebenfalls ist es dadurch möglich, eine dickere Matratze vorzusehen, wodurch der Komfort weiter erhöht wird. Die dickere Matratze kann beim Verstauen einfach komprimiert und die Liegevorrichtung in die Verstauposition geklappt werden.

In einer Ausführungsform - wenn die Zugelemente mit dem ersten Ende an der Matratzenoberseite befestigt sind - sind die Zugelemente derart angeordnet, dass durch Ziehen an dem zweiten Ende der Zugelemente eine Matratzendicke der Matratze komprimiert wird. Insbesondere weist das Matratzenaufnahmeelement mehrere Ausnehmungen auf, durch die die Zugelemente hindurchreichen, sodass an diesen, insbesondere an einer der Matratze gegenüberliegenden Seite des Matratzenaufnahmeelements, gezogen werden kann.

In einer Ausführungsform - wenn die Zugelemente mit dem ersten Ende an der Matratzenseitenseite befestigt sind - sind die Zugelemente derart angeordnet, dass durch Ziehen an dem zweiten Ende der Zugelemente die Matratze entlang einer Matratzenlängserstreckung oder einer Matratzenquererstreckung komprimiert wird.

Alternativ oder zusätzlich ist vorgesehen, dass die Liegevorrichtung eine Aufrollvorrichtung aufweist, die eingerichtet ist, um die Matratze - längs oder quer - aufzurollen. Die Aufrollvorrichtung weist hierzu eine drehbare Trommel auf, wobei die Matratze vorzugsweise entlang einer ersten Längsseite mit der Trommel verbunden ist. Durch Rotieren der Trommel wird die Matratze auf die Trommel aufgewickelt, wobei die Matratze insbesondere gleichzeitig komprimiert wird. Insbesondere ist die Trommel mit der Liegevorrichtung mechanisch gekoppelt, sodass eine Verlagerung der Liegevorrichtung zu einem Aufrollen oder Abrollen der Matratze führt. Hierzu ist die Matratze an einer zweiten Längsseite mit dem Matratzenaufnahmeelement verbunden.

Die Aufgabe wird auch gelöst, indem eine Nutzfahrzeugkabine für ein Nutzfahrzeug mit einer erfindungsgemäßen Liegevorrichtung oder einer Liegevorrichtung gemäß einer oder mehreren der zuvor beschriebenen Ausführungsformen geschaffen wird. Die Liegevorrichtung, insbesondere das Matratzenaufnahmeelement, ist klappbar an einer Kabinenrückwand der Nutzfahrzeugkabine befestigt, insbesondere gelagert. In Zusammenhang mit der Nutzfahrzeugkabine ergeben sich insbesondere die Vorteile, die bereits in Zusammenhang mit der Liegevorrichtung erläutert wurden.

In einer Ausführungsform ist die Liegevorrichtung zwischen einer Liegeposition und einer Verstauposition klappbar an der Kabinenrückwand befestigt, insbesondere gelagert.

In einer Ausführungsform - wenn die Liegevorrichtung die Aufrollvorrichtung aufweist - ist die Liegevorrichtung an der Kabinenrückwand der Nutzfahrzeugkabine einschiebbar und ausziehbar gelagert. Beim Einschieben der Liegevorrichtung in die Kabinenrückwand wird die Matratze aufgerollt, insbesondere mittels einer mechanischen Kopplung der Trommel mit dem Matratzenaufnahmeelement oder mittels einer im ausgezogenen Zustand der Matratze federvorgespannten Trommel. Beim Ausziehen der Liegevorrichtung aus der Kabinenrückwand wird die Matratze abgerollt, insbesondere indem die Matratze an der zweiten Längsseite mit dem Matratzenaufnahmeelement verbunden ist.

Vorteilhaft kann die Liegevorrichtung auf zwei verschiedenen Weisen - mittels klappen oder mittels einschieben - in der Nutzfahrzeugkabine verstaut werden, sodass die Liegevorrichtung einen Fahrersitz freigibt. Es ist möglich, dass die Liegevorrichtung nur abschnittsweise, insbesondere um etwa ein Drittel einer Quererstreckung der Matratze, insbesondere um 10 cm bis 20 cm, in die Kabinenrückwand eingeschoben wird. Insbesondere ist dies bereits ausreichend, um den Fahrersitz freizugeben.

Die Aufgabe wird auch gelöst, indem ein Nutzfahrzeug mit einer erfindungsgemäßen Nutzfahrzeugkabine oder einer Nutzfahrzeugkabine gemäß einer oder mehreren der zuvor beschriebenen Ausführungsformen geschaffen wird. In Zusammenhang mit dem Nutzfahrzeug ergeben sich insbesondere die Vorteile, die bereits in Zusammenhang mit der Nutzfahrzeugkabine und der Liegevorrichtung erläutert wurden.

Die Erfindung wird im Folgenden anhand der Zeichnung näher erläutert. Dabei zeigen:
- Fig. 1: eine schematische Darstellung eines ersten Ausführungsbeispiels einer Liegevorrichtung für eine Nutzfahrzeugkabine eines Nutzfahrzeugs,
- Fig. 2: eine schematische, vergrößerte Darstellung der Liegevorrichtung von Figur 1,
- Fig. 3: eine schematische Darstellung eines zweiten Ausführungsbeispiels einer Liegevorrichtung für eine Nutzfahrzeugkabine eines Nutzfahrzeugs,
- Fig. 4: eine schematische Darstellung eines dritten Ausführungsbeispiels einer Liegevorrichtung für eine Nutzfahrzeugkabine eines Nutzfahrzeugs, und
- Fig. 5: eine schematische Darstellung der Liegevorrichtung von Figur 4 in einer zweiten Ansicht.

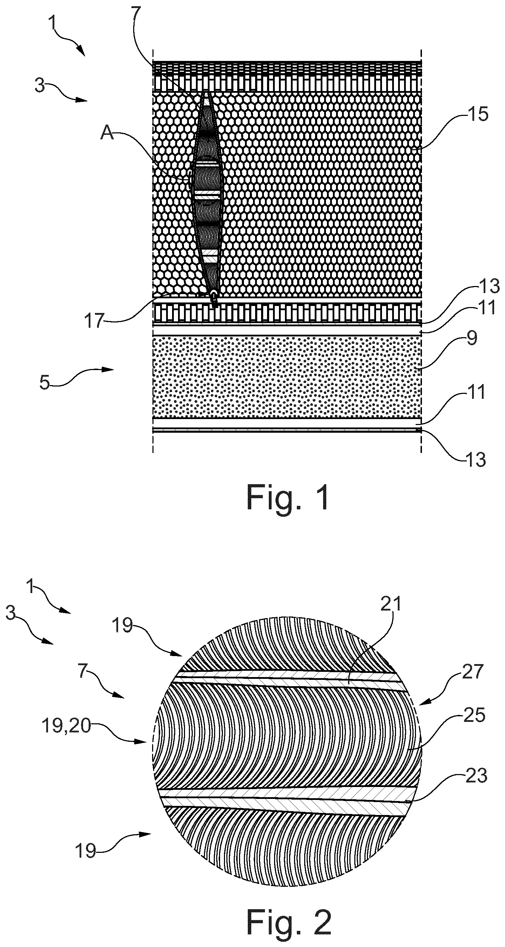

**Figur 1** zeigt eine schematische Darstellung eines ersten Ausführungsbeispiels einer Liegevorrichtung 1 für eine nicht dargestellte Nutzfahrzeugkabine eines nicht dargestellten Nutzfahrzeugs. Dabei ist die Liegevorrichtung 1 in einer Seitenansicht dargestellt.

Die Liegevorrichtung 1 weist eine Matratze 3 und ein Matratzenaufnahmeelement 5 auf. Die Matratze 3 weist einen mehrlagigen Matratzenkern 7 auf. Das Matratzenaufnahmeelement 5 weist einen Grundkörper 9 und zwei textile Decklagen 11 auf, wobei die textilen Decklagen 11 an zwei gegenüberliegenden Seiten des Grundkörpers 9 befestigt sind. Die Matratze 3 und das Matratzenaufnahmeelement 5 weisen einen Vorrichtungswerkstoff auf oder sind aus einem Vorrichtungswerkstoff gebildet, wobei der Vorrichtungswerkstoff ein Kunststoff ist.

Der Vorrichtungswerkstoff ist ausgewählt aus einer Gruppe, bestehend aus: Einem Polyethylenterephthalat(PET)-Werkstoff, einem Polylactide(PLA)-Werkstoff, einem Polypropylen(PP)-Werkstoff und einem Polyamid(PA)-Werkstoff.

Insbesondere weisen die Matratze 3 und das Matratzenaufnahmeelement 5, insbesondere die zwei textilen Decklagen 11 und der Grundkörper 9, den gleichen, insbesondere identischen, Kunststoff auf oder sind aus dem gleichen, insbesondere identischen, Kunststoff gebildet. Der Grundkörper 9 ist vorliegend als ein Schaumstoffkörper ausgebildet.

Das Matratzenaufnahmeelement 5 weist zwei Sichtflächenelemente 13 auf, die an den zwei Decklagen 11 befestigt sind. Die Sichtflächenelemente 13 sind jeweils als ein Textil oder als eine Folie ausgebildet, wobei die Sichtflächenelemente 13 den Vorrichtungswerkstoff aufweisen oder aus dem Vorrichtungswerkstoff gebildet sind. Die Decklagen 11 sind jeweils mit dem Sichtflächenelement 13 bespannt oder das Sichtflächenelement 13 ist jeweils mit einem Klebstoff auf den Decklagen 11 festgeklebt.

Der Matratzenkern 7 ist vorliegend in einer Matratzenhülle 15 angeordnet, wobei die Matratzenhülle 15 aus einem textilen Gestrick, einem textilen Gewebe, einem textilen Vlies oder einem textilen Gewirk besteht. Die Matratzenhülle 15 kann auf oder entlang einer Längsseite öffenbar ausgebildet sein, beispielsweise mittels eines Reisverschlusses 17, eines Klettverschlusses und/oder mittels mehrerer Knöpfe, insbesondere Druckknöpfe.

In einem nicht dargestellten Ausführungsbeispiel ist vorgesehen, dass die Liegevorrichtung 1 ein zusätzliches Dämpfungselement aufweist. In einem nicht dargestellten Ausführungsbeispiel ist vorgesehen, dass die Liegevorrichtung 1 eine Temperierungsvorrichtung aufweist, die eingerichtet ist, um die Matratze 3 wahlweise zu heizen und zu kühlen.

Die vorliegende Liegevorrichtung 1 kann in eine Nutzfahrzeugkabine für ein Nutzfahrzeug eingebaut sein. Die Liegevorrichtung 1, insbesondere das Matratzenaufnahmeelement 5, ist dabei klappbar an einer Kabinenrückwand der Nutzfahrzeugkabine befestigt, insbesondere gelagert.

Ein strichliert eingefasster Ausschnitt A ist in Figur 2 vergrößert dargestellt.

**Figur 2** zeigt eine schematische, vergrößerte Darstellung der Liegevorrichtung 1 von Figur 1.

Dabei sind gleiche und funktionsgleiche Elemente in allen Figuren mit gleichen Bezugszeichen versehen, sodass insoweit jeweils auf die vorangegangene Beschreibung verwiesen wird.

Ein Bereich der Matratze 3 im strichliert eingefassten Ausschnitt A von Figur 1 ist vorliegend vergrößert dargestellt. Der Matratzenkern 7 weist mehrere aufeinander angeordnete Matratzenteilkerne 19 auf. Ein Matratzenteilkern 19 der Matratzenteilkerne 19 - vorliegend beispielsweise ein mittlerer Matratzenteilkern 20 - weist eine Oberschicht 21 und eine Unterschicht 23 auf, die mittels dazwischen angeordneter und mit der Oberschicht 21 und der Unterschicht 23 verbundener Verbindungsfäden 25 beabstandet sind, was auch als sogenanntes Abstandsgewirk 27 bezeichnet wird. Insbesondere sind mehrere Abstandsgewirke 27 innerhalb der Matratzenhülle 15 übereinander angeordnet, wodurch eine mehrlagige Matratze 3 erhalten wird.

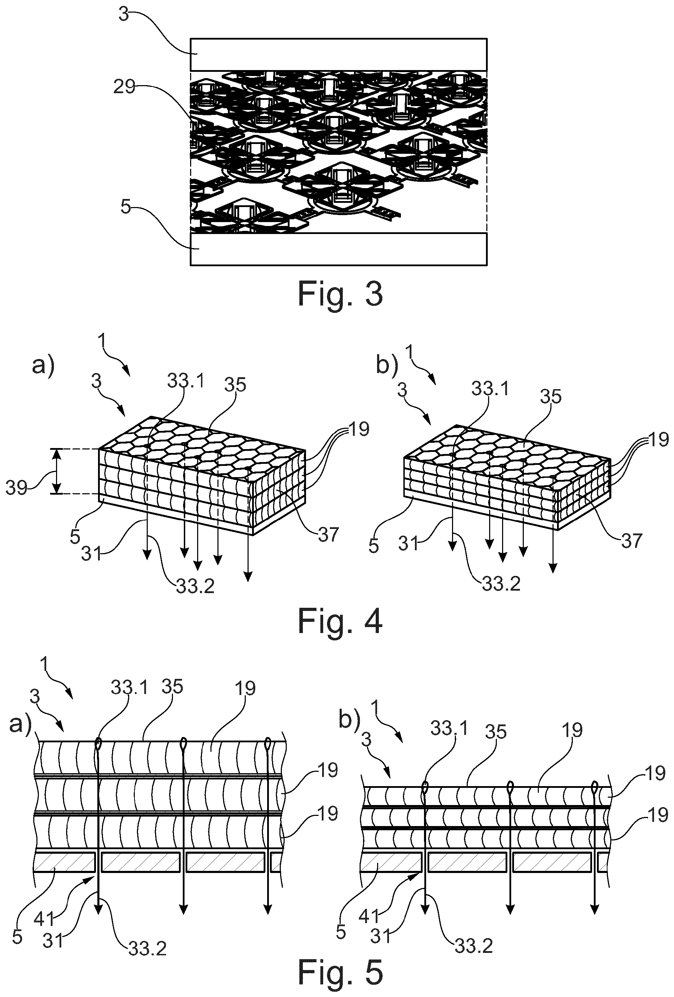

**Figur 3** zeigt eine schematische Darstellung eines zweiten Ausführungsbeispiels einer Liegevorrichtung 1 für eine Nutzfahrzeugkabine eines Nutzfahrzeugs.

Das Matratzenaufnahmeelement 5 und die Matratze 3 entsprechen dem Aufbau des Matratzenaufnahmeelements 5 und der Matratze 3 der Figuren 1 und 2 und sind in Figur 3 deshalb nur grob als Kasten dargestellt. Auf dem Matratzenaufnahmeelement 5 ist vorliegend eine Mehrzahl von Federelementen 29 angeordnet, auf denen die Matratze 3 aufliegt. Um die Ausgestaltung der Federelemente 29 besser erkennen zu können, sind diese leicht nach vorne gekippt dargestellt. Die Federelemente 29 sind an dem Matratzenaufnahmeelement 5, insbesondere an einer der Matratze 3 zugewandten Seite, befestigt. Dabei kann das Matratzenaufnahmeelement 5 eine Mehrzahl von hier nicht dargestellten Ausnehmungen aufweisen, in die die Federelemente 29 eingesteckt sind.

**Figur 4** zeigt eine schematische Darstellung eines dritten Ausführungsbeispiels einer Liegevorrichtung 1 für eine Nutzfahrzeugkabine eines Nutzfahrzeugs in einer isometrischen Ansicht.

Die vorliegende Matratze 3 basiert auf der Matratze 3 aus den Figuren 1 und 2. Zusätzlich weist die Liegevorrichtung 1 mehrere durch die Matratze 3 hindurchreichende Zugelemente 31 auf. Die Zugelemente 31 sind mit einem ersten Ende 33.1 an einer Matratzenoberseite 35 - wie vorliegend - oder an einer Matratzenseitenseite 37 - nicht dargestellt - befestigt. Die Zugelemente 31 sind derart angeordnet, dass durch Ziehen an einem zweiten Ende 33.2 der Zugelemente 31 die Matratze 3 komprimiert wird. Vorliegend sind die Zugelemente 31 derart angeordnet, dass durch Ziehen an dem zweiten Ende 33.2 der Zugelemente 31 eine - mittels einer Bemaßungslinie dargestellten - Matratzendicke 39 der Matratze 3 komprimiert wird. Dabei zeigt Teilfigur 4a eine unkomprimierte Matratze 3 und Teilfigur 4b zeigt eine komprimierte Matratze 4.

**Figur 5** zeigt eine schematische Darstellung der Liegevorrichtung 1 von Figur 4 in einer zweiten Ansicht von der Seite.

Das Matratzenaufnahmeelement 5 weist mehrere Ausnehmungen 41 auf, durch die die Zugelemente 31 hindurchreichen, sodass an diesen, insbesondere an einer der Matratze 3 gegenüberliegenden Seite des Matratzenaufnahmeelements 5, gezogen werden kann. Obwohl das Matratzenaufnahmeelement 5 hier schraffiert dargestellt ist, entspricht der Aufbau dem Aufbau des Matratzenaufnahmeelements 5 von den Figuren 1 und 2. Vorliegend zeigt Teilfigur 5a eine unkomprimierte Matratze 3 und Teilfigur 5b zeigt eine komprimierte Matratze 3.

### Bezugszeichenliste

- 1: Liegevorrichtung
- 3: Matratze
- 5: Matratzenaufnahmeelement
- 7: Matratzenkern
- 9: Grundkörper
- 11: Decklagen
- 13: Sichtflächenelement
- 15: Matratzenhülle
- 17: Reisverschluss
- 19: Matratzenteilkern
- 20: mittlerer Matratzenteilkern
- 21: Oberschicht
- 23: Unterschicht
- 25: Verbindungsfäden
- 27: Abstandsgewirk
- 29: Federelemente
- 31: Zugelemente
- 33.1: erstes Ende
- 33.2: zweites Ende
- 35: Matratzenoberseite
- 37: Matratzenseitenseite
- 39: Matratzendicke
- 41: Ausnehmungen

## Patentansprüche

1. Liegevorrichtung (1) für eine Nutzfahrzeugkabine eines Nutzfahrzeugs, aufweisend:
- eine Matratze (3), die einen mehrlagigen Matratzenkern (7) aufweist, und
- ein Matratzenaufnahmeelement (5), das einen Grundkörper (9) und zwei textile Decklagen (11) aufweist, wobei die textilen Decklagen (11) an zwei gegenüberliegenden Seiten des Grundkörpers (9) befestigt sind, wobei
- die Matratze (3) und das Matratzenaufnahmeelement (5) einen Vorrichtungswerkstoff aufweisen oder aus einem Vorrichtungswerkstoff gebildet sind, wobei der Vorrichtungswerkstoff ein Kunststoff ist.

2. Liegevorrichtung (1) nach Anspruch 1, wobei der Grundkörper (9) als ein Schaumstoffkörper oder als ein Wabenstrukturkörper ausgebildet ist.

3. Liegevorrichtung (1) nach einem der vorhergehenden Ansprüche, wobei
- das Matratzenaufnahmeelement (5) ein Sichtflächenelement (13) aufweist, das an einer Decklage (11) der zwei Decklagen (11) befestigt ist, wobei
- das Sichtflächenelement (13) als ein Textil oder als eine Folie ausgebildet ist, wobei
- das Sichtflächenelement (13) den Vorrichtungswerkstoff aufweist oder aus dem Vorrichtungswerkstoff gebildet ist.

4. Liegevorrichtung (1) nach Anspruch 3, wobei die Decklage (11) mit dem Sichtflächenelement (13) bespannt oder das Sichtflächenelement (13) mit einem Klebstoff auf der Decklage (11) festgeklebt ist.

5. Liegevorrichtung (1) nach einem der vorhergehenden Ansprüche, wobei auf dem Matratzenaufnahmeelement (5) eine Mehrzahl von Federelementen (29) angeordnet ist, auf denen die Matratze (3) aufliegt.

6. Liegevorrichtung (1) nach Anspruch 5, wobei die Federelemente (29) an dem Matratzenaufnahmeelement (5) befestigt sind.

7. Liegevorrichtung (1) nach Anspruch 6, wobei das Matratzenaufnahmeelement (5) eine Mehrzahl von Ausnehmungen aufweist, in die die Federelemente (29) eingesteckt sind.

8. Liegevorrichtung (1) nach einem der vorhergehenden Ansprüche, wobei der Matratzenkern (7) mehrere aufeinander angeordnete Matratzenteilkerne (19) aufweist.

9. Liegevorrichtung (1) nach Anspruch 8, wobei ein Matratzenteilkern (19) der Matratzenteilkerne (19) eine Oberschicht (21) und eine Unterschicht (23) aufweist, die mittels dazwischen angeordneter und mit der Oberschicht (21) und der Unterschicht (23) verbundener Verbindungsfäden (25) beabstandet sind.

10. Liegevorrichtung (1) nach einem der vorhergehenden Ansprüche, wobei der Matratzenkern (7) in einer Matratzenhülle (15) angeordnet ist, wobei die Matratzenhülle (15) ein textiles Gestrick, ein textiles Gewebe, ein textiles Vlies oder eins textilen Gewirk aufweist, oder aus einem textilen Gestrick, einem textilen Gewebe, einem textilen Vlies oder einem textilen Gewirk besteht.

11. Liegevorrichtung (1) nach einem der vorhergehenden Ansprüche, wobei die Liegevorrichtung (1) ein zusätzliches Dämpfungselement aufweist.

12. Liegevorrichtung (1) nach einem der vorhergehenden Ansprüche, die eine Temperierungsvorrichtung aufweist, die eingerichtet ist, um die Matratze (3) wahlweise zu heizen und zu kühlen.

13. Liegevorrichtung (1) nach einem der vorhergehenden Ansprüche, wobei die Liegevorrichtung (1) mehrere durch die Matratze (3) hindurchreichende Zugelemente (31) aufweist, wobei die Zugelemente (31) mit einem ersten Ende (33.1) an einer Matratzenoberseite (35) oder an einer Matratzenseitenseite (37) befestigt sind, wobei die Zugelemente (31) derart angeordnet sind, dass durch Ziehen an einem zweiten Ende (33.2) der Zugelemente (31) die Matratze (3) komprimiert wird.

14. Nutzfahrzeugkabine für ein Nutzfahrzeug, wobei die Nutzfahrzeugkabine eine Liegevorrichtung (1) nach einem der Ansprüche 1 bis 13 aufweist, wobei die Liegevorrichtung (1) klappbar an einer Kabinenrückwand der Nutzfahrzeugkabine befestigt ist.

15. Nutzfahrzeug mit einer Nutzfahrzeugkabine nach Anspruch 14.
